# EUROPEAN PATENT APPLICATION

(11) **EP 4 830 518 A1**
(43) Date of publication of application: **28.10.2026**
(21) Application number: 26173783.7
(22) Date of filing: 21.04.2026
(51) Int. Cl.: A01K 73/045, B63B 21/66, G01V 1/38

(54) **AN ENERGY-EFFICIENT HYDROFOIL ARRANGEMENT FOR CONTROLLABLE TRAWL DOOR**

(30) Priority: 22.04.2025 DK PA202570062
(71) Applicant: Volu Ventis ApS, 8600 Silkeborg (DK); Vónin P/F, 530 Fuglafjørður (FO)
(72) Inventor: HJORT, Søren, 8600 Silkeborg (DK)
(74) Representative: Aera A/S

(57) **Abstract**

The disclosure relates to a trawl door (2) comprising a plurality of hydrofoils (9) extending in parallel in a longitudinal direction and being arranged in an overlapping sequence so that one or more flow channels (15) are formed between neighbouring hydrofoils (9), each hydrofoil (9) having a leading edge (10) and a trailing edge (11), a controllable hydrofoil arrangement (20) extending in the longitudinal direction and arranged at a pressure side (12) of the hydrofoils (9), and having a leading edge (24) and a trailing edge (25), drive means (21) for rotating the controllable hydrofoil arrangement (20) about a pivoting axis (22) extending in the longitudinal direction, wherein the trawl door has a chord length (C), wherein the drive means (21) are arranged to rotate the controllable hydrofoil arrangement (20) about the pivoting axis (22) between a disengaged position and an engaged position, wherein, in the engaged position, the trawl door chord length (C) is extended compared to the disengaged position, and wherein the controllable hydrofoil arrangement (20) is orientated such that it, upon rotation by the drive means (21) about the pivoting axis (22), during operation of the trawl door (2), move substantially parallel to its own main surface such that water pressure forces are directed substantially perpendicular to the moving direction of the controllable 30hydrofoil arrangement (20). The disclosure further relates to the use of a set of trawl doors and a round-shaped elongated element for a trawl door.

## Description

### Technical Field

The present invention relates to a trawl door with an actuation system for positional control in the water, which minimizes the use of energy.

### Background art

Trawl doors for trawling have been used for more than half a century. The trawl doors are hydrodynamic wings which upon being towed by the towing vessel (trawler) will generate outwards directed forces, such that the starboard trawl door will be forced outwards in the starboard direction and the port trawl door will be forced outwards in the port direction. The trawl doors are connected to the towed trawl by bridles, and as the trawl doors are forced away from each other by the hydrodynamic spreading forces the trawl will gradually open laterally until the desired trawl opening spread is achieved.

Over the past decade developments towards controllable trawl doors have appeared, such that the skipper on the bridge has remote control of the trawl doors and can adjust their position laterally and/or vertically in the water during the trawling operation. The potential advantages being that the trawl spread can be kept constant at all times, and that the trawling depth can be quickly adjusted to catch the fish located on the ship's sonar equipment. Different control actuation concepts have been proposed. Common for most concepts is the implementation of at least two actuators on each trawl door: one on the upper half and one on the lower half of the vertically oriented trawl door, such that individual actuation of the actuators can enable the door to increase or decrease the spreading force on both upper and lower half, or decrease spreading force on lower half while increasing on upper half, such that the trawl door will rotate slightly (i.e. around the horizontal axis) and deflect the spreading force direction slightly downwards so the trawl door will go deeper in the water, and vice versa if the trawl door is to go higher in the water.

Existing control concepts relies on e.g. pivotable flaps, which is perhaps the most used control concept. It has its roots in the aviation industry where it has been used on aircrafts for more than a century. A disadvantage of the pivotable flaps is that the flap pivoting motion is directed perpendicular to the flap surface, and hence parallel to the water pressure forces acting on the flap. Water is a heavy medium and at typical towing velocities of 3-6 knots substantial pressure forces will impact a pivotable flap. Consequently, when the flap rotates in one of its two actuation directions, the mechanical work - and thus the discharge energy needed from the battery power supply - needed to overcome the water pressure forces is substantial.

Another concept is based on sliding surfaces on the hydrofoils of the trawl door. A disadvantage of the sliding surfaces is the friction, wear, and tear involved in the sliding motion, which is also why this concept is mostly of academic interest and has not yet been implemented on full scale trawl doors.

Another common disadvantage of both pivotable and slidable flaps and slidable foil extensions is the mechanical vulnerability. Flaps and foil extension are lifting-force surfaces that contribute to the overall spreading force of the trawl door, and their exposed position on the trawl door is therefore difficult to protect from possible bumps and accidental mechanical impacts, hence, it is an object of the present invention to provide a trawl door with a robust energy-efficient control concept.

### Summary of the invention

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

All directions in regard to the trawl door as disclosed herein, such as upper, lower, horizontal forward/mid and aft end, all relate to the positions in or on the trawl door when the trawl door is in its operational position, such as in the water during trawl operation.

Disclosed herein in a first aspect is a trawl door comprising a plurality of hydrofoils extending in parallel in a longitudinal direction of the hydrofoils and being arranged in an overlapping sequence so that one or more flow channels are formed between neighbouring hydrofoils, each hydrofoil having a leading edge and a trailing edge, a controllable hydrofoil arrangement extending in the longitudinal direction of the plurality of hydrofoils and arranged at a pressure side of the plurality of hydrofoils, and having a leading edge and a trailing edge, drive means for rotating the controllable hydrofoil arrangement about a pivoting axis, the pivoting axis extending in the longitudinal direction of the plurality of hydrofoils, wherein the trawl door has a chord length, wherein the drive means are arranged to rotate the controllable hydrofoil arrangement about the pivoting axis between a disengaged position and an engaged position, wherein when the controllable hydrofoil arrangement is in the engaged position the trawl door chord length is extended compared to when the controllable hydrofoil arrangement is in the disengaged position, and wherein the controllable hydrofoil arrangement is orientated such that it, upon rotation by the drive means about the pivoting axis, during operation of the trawl door, move substantially parallel to its own main surface such that water pressure forces are directed substantially perpendicular to the moving direction of the controllable hydrofoil arrangement.

In one or more embodiments, the trawl door has a chord length defined as the chord length measured from a leading edge of a first hydrofoil of the overlapping sequence of the plurality of hydrofoils to the trailing edge of the controllable hydrofoil arrangement.

In one or more embodiments, the controllable hydrofoil arrangement is configured such that upon rotating from the disengaged position towards the engaged position the controllable hydrofoil arrangement extends the suction side of the trawl door, thereby increasing the potential for hydrodynamic lift generation during operation of the trawl door. The suction side of a trawl door is the convex outer side of the overlapping sequence of curved slender hydrofoils.

In one or more embodiments, one or more flow channels are formed between the plurality of hydrofoils extending in parallel in a longitudinal direction of the hydrofoils and the controllable hydrofoil arrangement. By forming one or more flow channels between the plurality of hydrofoils and the controllable hydrofoil arrangement, a sliding surfaces of the hydrofoil arrangement on the one or more of the plurality of hydrofoils is avoided, and thus the disadvantageous of friction, wear, and tear involved in a sliding motion is removed and the controllable hydrofoil arrangement is much more free to rotate, only having to overcome the forces applied by the water.

The disclosed trawl door has an energy-efficient control concept. The drive means is placed to control the position of the controllable hydrofoil arrangement. The controllable hydrofoil arrangement can be controlled by the drive means and rotate around the pivoting axis. The energy amount required to make the controllable hydrofoil arrangement pivot around their pivoting axis is kept minimal by orientating said controllable hydrofoil arrangement such that the hydrofoils in the arrangement, upon pivoting, move substantially parallel to their own main surfaces such that water pressure forces are directed substantially perpendicular to the moving direction of the controllable hydrofoil arrangement.

As disclosed herein, the term "substantially parallel" is used to describe a flat or curved plate motion, which is in-planar within a +/- 15 degree tolerance.

As disclosed herein, the term "substantially perpendicular" is used to describe pressure force directions that are oriented 90 degrees off the flat or curved plate motion within a +/- 15 degree tolerance.

As used herein, the term "energy efficiency" is used in the sense that very little mechanical work is needed to pivot the parts of the trawl door, which change the trawl door lift forces and positional equilibrium. This is obtained by letting the controllable hydrofoil arrangement pivot in a circular motion around a rotational centre, hereby mimicking a sliding motion, such that said hydrofoils main surfaces move substantially perpendicular to the water pressure forces instead of substantially parallel to the water pressure forces, when the trawl door is used during trawl operations. Via this setup the main surfaces of the controllable hydrofoil arrangement must overcome only small water friction forces, however the otherwise dominating water pressure forces are reduced to a minimum, and hereby the trawl door obtains an energy-efficient control concept.

In physical terms, the mechanical work (i.e. energy) needed to move an object; say from point A to point B in a pressure field, is described by the vector integration from A to B of pressure force times distance increment. If the pressure force vector is aligned (parallel) with the moved distance, then mechanical work is performed. Contrarily, if the pressure force vector is perpendicular or almost perpendicular to the moved distance, then the mechanical work remains zero, or almost zero, such that the movement requires no or very little energy.

The term "robust" is used in the sense that the controllable hydrofoil arrangement main surfaces are easily positioned inside the trawl door in a manner that protects them and prevents them from bumps and mechanical hard impacts, e.g. when the trawl door is dumped into the seabed, during trawl door transportation, or when the trawl door is hauled up from the sea and wire-pulled to a hard stop against the back end of the ship hull.

One advantage of having such motion is e.g., that upon engagement of the controllable hydrofoil arrangement, it will move in a substantially sliding motion out of its disengaged/inactive position into an engaged/active position, hereby increasing the lift coefficient of the trawl door. This is particularly advantageous compared to e.g., trawl doors where an engagement would decrease the lift coefficient of the trawl door. Further an increase in lift coefficient (higher lift coefficient achieved) makes it possible to reduce the size and weight of the trawl door.

The trawl door in configured such that the difference between the maximum lift coefficient, when the controllable hydrofoil arrangement is fully engaged, and the minimum lift coefficient, when the controllable hydrofoil arrangement is fully disengaged, is very high. The achievable difference in lift coefficient is what makes the trawl door controllable. The controllable hydrofoil arrangement therefore offers an improved controllability compared to the earlier control systems used in other trawl door concepts.

Disclosed herein in a second aspect is use of a set of trawl doors comprising one starboard trawl door and one port trawl door, for trawling operations, wherein each of the trawl doors comprises a plurality of hydrofoils extending in parallel in a longitudinal direction of the hydrofoils and being arranged in an overlapping sequence so that one or more flow channels are formed between neighbouring hydrofoils, each hydrofoil having a leading edge and a trailing edge, a controllable hydrofoil arrangement extending in the longitudinal direction of the plurality of hydrofoils and arranged at a pressure side of the plurality of hydrofoils, and having a leading edge and a trailing edge, drive means for rotating the controllable hydrofoil arrangement about a pivoting axis, the pivoting axis extending in the longitudinal direction of the plurality of hydrofoils, wherein the trawl door has a chord length, wherein the drive means are arranged to rotate the controllable hydrofoil arrangement about the pivoting axis between a disengaged position and an engaged position, wherein when the controllable hydrofoil arrangement is in the engaged position the trawl door chord length is extended compared to when the controllable hydrofoil arrangement is in the disengaged position, and wherein the controllable hydrofoil arrangement is orientated such that it, upon rotation by the drive means about the pivoting axis, during operation of the trawl door, move substantially parallel to its own main surface such that water pressure forces are directed substantially perpendicular to the moving direction of the controllable hydrofoil arrangement.

Disclosed herein in a third aspect is use of a set of trawl doors comprising one starboard trawl door and one port trawl door, for towing a fishing trawl net, wherein a fishing vessel is towing the set of trawl doors, and wherein each of the trawl doors comprises a plurality of hydrofoils extending in parallel in a longitudinal direction of the hydrofoils and being arranged in an overlapping sequence so that one or more flow channels are formed between neighbouring hydrofoils, each hydrofoil having a leading edge and a trailing edge, a controllable hydrofoil arrangement extending in the longitudinal direction of the plurality of hydrofoils and arranged at a pressure side of the plurality of hydrofoils, and having a leading edge and a trailing edge, drive means for rotating the controllable hydrofoil arrangement about a pivoting axis, the pivoting axis extending in the longitudinal direction of the plurality of hydrofoils, wherein the trawl door has a chord length, wherein the drive means are arranged to rotate the controllable hydrofoil arrangement about the pivoting axis between a disengaged position and an engaged position, wherein when the controllable hydrofoil arrangement is in the engaged position the trawl door chord length is extended compared to when the controllable hydrofoil arrangement is in the disengaged position, and wherein the controllable hydrofoil arrangement is orientated such that it, upon rotation by the drive means about the pivoting axis, during operation of the trawl door, move substantially parallel to its own main surface such that water pressure forces are directed substantially perpendicular to the moving direction of the controllable hydrofoil arrangement.

Disclosed herein in a fourth aspect is use of a set of trawl doors comprising one starboard trawl door and one port trawl door, for towing seismic equipment for seabed measurements for measuring the seabed composition, and wherein each of the trawl doors comprises a plurality of hydrofoils extending in parallel in a longitudinal direction of the hydrofoils and being arranged in an overlapping sequence so that one or more flow channels are formed between neighbouring hydrofoils, each hydrofoil having a leading edge and a trailing edge, a controllable hydrofoil arrangement extending in the longitudinal direction of the plurality of hydrofoils and arranged at a pressure side of the plurality of hydrofoils, and having a leading edge and a trailing edge, drive means for rotating the controllable hydrofoil arrangement about a pivoting axis, the pivoting axis extending in the longitudinal direction of the plurality of hydrofoils, wherein the trawl door has a chord length, wherein the drive means are arranged to rotate the controllable hydrofoil arrangement about the pivoting axis between a disengaged position and an engaged position, wherein when the controllable hydrofoil arrangement is in the engaged position the trawl door chord length is extended compared to when the controllable hydrofoil arrangement is in the disengaged position, and wherein the controllable hydrofoil arrangement is orientated such that it, upon rotation by the drive means about the pivoting axis, during operation of the trawl door, move substantially parallel to its own main surface such that water pressure forces are directed substantially perpendicular to the moving direction of the controllable hydrofoil arrangement.

The term "comprising", "comprises", or "to comprise" is to be interpreted as specifying the presence of the stated parts, steps, features, or components, but does not exclude the presence of one of more additional parts, steps, features, or components.

### Brief description of the drawings

In the following, exemplary embodiments of the invention are described in more detail with reference to the figures, of which
- Fig. 1: is a trawling vessel with trawl doors and trawl as seen in perspective.
- Fig. 2: is a cross-sectional view of a trawl door with energy-efficient controllable hydrofoil arrangement where the pivoting axis is adjacent to a round-shaped elongated element and the controllable hydrofoil arrangement is shown in disengaged position.
- Fig. 3: is a cross-sectional view of a trawl door with energy-efficient controllable hydrofoil arrangement where the pivoting axis is adjacent to a round-shaped elongated element and the controllable hydrofoil arrangement is shown in A) disengaged position, B) mid-position, and C) engaged position.
- Fig. 4: is a cross-sectional view of a trawl door with energy-efficient controllable hydrofoil arrangement where a spindle arrangement used for actuation are inside a round-shaped elongated element, and the controllable hydrofoil arrangement is shown in A) disengaged position, B) mid-position, and C) engaged position.
- Fig. 5: is a cross-sectional view of a trawl door with energy-efficient controllable hydrofoil arrangement where another example of drive means are inside a round-shaped elongated element, and the controllable hydrofoil arrangement is shown in A) disengaged position, B) mid-position, and C) engaged position.
- Fig. 6: is a perspective view of the trawl door from figure 3, where the controllable hydrofoil arrangement is shown in A) disengaged position, B) mid-position, and C-E) engaged position.

### Detailed description of the invention

The description herein of any aspect or embodiment of the invention using terms such as "comprising", "having," "including," or "containing" with reference to an element or elements is intended to provide support for a similar aspect or embodiment of the invention that "consists of", "consists essentially of", or "substantially comprises" that particular element or elements, unless otherwise stated or clearly contradicted by context, e.g. a composition described herein as comprising a particular element should be understood as also describing a composition consisting of that element, unless otherwise stated or clearly contradicted by context. It will be further understood that the terms "comprises," "comprising," "includes" and/or "including," when used in this specification, specify the presence of stated features, integers, steps, operations, elements, and/or components, but do not preclude the presence or addition of one or more other features, integers, steps, operations, elements, components, and/or groups thereof.

When describing the below embodiments, the present invention envisages all possible combinations and permutations of the below described embodiments with the above disclosed aspects.

The invention relates to a trawl door comprising a plurality of hydrofoils extending in parallel in a longitudinal direction of the hydrofoils and being arranged in an overlapping sequence so that one or more flow channels are formed between neighbouring hydrofoils, a controllable hydrofoil arrangement extending in the longitudinal direction of the plurality of hydrofoils and arranged at a pressure side of the plurality of hydrofoils, drive means for rotating the controllable hydrofoil arrangement about a pivoting axis extending in the longitudinal direction of the plurality of hydrofoils, wherein the drive means are arranged to rotate the controllable hydrofoil arrangement between a disengaged position and an engaged position, in which the controllable hydrofoil arrangement upon rotating from disengaged position towards an engaged position extends the suction side of the trawl door, thereby increasing the potential for hydrodynamic lift generation during operation of the trawl door.

The disclosed trawl door has an energy-efficient control concept. The drive means is placed to control the position of the controllable hydrofoil arrangement. The controllable hydrofoil arrangement can be controlled by the drive means and rotate around the pivoting axis. The energy amount required to make the controllable hydrofoil arrangement pivot around its pivoting axis is kept minimal by orientating said controllable hydrofoil arrangement such that it, upon pivoting, move substantially parallel to its own main surfaces such that water pressure forces are directed substantially perpendicular to the moving direction of the controllable hydrofoil arrangement.

Hence, in one or more embodiments, the controllable hydrofoil arrangement are orientated such that it, upon pivoting during operation of the trawl door, move substantially parallel to its own main surfaces such that water pressure forces are directed substantially perpendicular to the moving direction of the controllable hydrofoil arrangement. This means that very little mechanical work is needed to pivot the parts of the trawl door, which change the trawl door lift forces and positional equilibrium. This is obtained by letting the controllable hydrofoil arrangement pivot around a rotational centre, such that said controllable hydrofoil arrangement main surfaces move substantially perpendicular to the water pressure forces instead of substantially parallel to the water pressure forces, when the trawl door is used during trawl operations. Via this setup the main surfaces of the controllable hydrofoil arrangement must overcome only small water friction forces, however the otherwise dominating water pressure forces are reduced to a minimum, and hereby the trawl door obtains an energy-efficient control concept. Hence, in one or more embodiments, the controllable hydrofoil arrangement pivot around the pivoting axis, such that the controllable hydrofoil arrangement main surfaces move substantially perpendicular to the water pressure forces during trawl operations.

In one or more embodiments, the controllable hydrofoil arrangement is orientated such that the water pressure forces are directed substantially through the pivoting axis during trawl operations.

In one or more embodiments, one or more flow channels are formed between the plurality of hydrofoils extending in parallel in a longitudinal direction of the hydrofoils and the controllable hydrofoil arrangement.

In one or more embodiments, the trawl door further comprises one or more shutters extending in the longitudinal direction of the plurality of hydrofoils and arranged at a pressure side of the plurality of hydrofoils. In one or more embodiments, the trawl door further comprises one or more second drive means for rotating the one or more shutters about a second pivoting axis extending in the longitudinal direction of the plurality of hydrofoils, wherein the second drive means are arranged to rotate at least one of the shutters between a disengaged position and an engaged position, in which the engaged position of the at least one shutter substantially reduces or prevents a fluid flow through one or more of the flow channels during operation of the trawl door.

The disclosed shutters add another energy-efficient control concept to the trawl door, that may be used in conjunction with the controllable hydrofoil arrangement. The second drive means is placed to control the position of the one or more shutters. Each shutter can be controlled by the second drive means and rotate around the second pivoting axis. The energy amount required to make the shutters pivot around their pivoting axis is kept minimal by orientating said controllable shutters such that they, upon pivoting, move substantially parallel to their own main surfaces such that water pressure forces are directed substantially perpendicular to the moving direction of the shutters. Hence, in one or more embodiments, the shutters are orientated such that they, upon pivoting during operation of the trawl door, move substantially parallel to their own main surfaces such that water pressure forces are directed substantially perpendicular to the moving direction of the shutters. This means that very little mechanical work is needed to pivot the parts of the trawl door, which change the trawl door lift forces and positional equilibrium. This is obtained by letting the shutters pivot around a rotational centre, such that said shutters main surfaces move substantially perpendicular to the water pressure forces instead of substantially parallel to the water pressure forces, when the trawl door is used during trawl operations. Via this setup the main surfaces of the shutters must overcome only small water friction forces, however the otherwise dominating water pressure forces are reduced to a minimum, and hereby the trawl door obtains an energy-efficient control concept. Hence, in one or more embodiments, the shutters pivot around the pivoting axis, such that the shutters main surfaces move substantially perpendicular to the water pressure forces during trawl operations.

In one or more embodiments, the shutters are orientated such that the water pressure forces are directed substantially through the shutter pivoting axis during trawl operations.

In one or more embodiments, the controllable hydrofoil arrangement is configured such that upon rotating from the disengaged position towards the engaged position the controllable hydrofoil arrangement extends the suction side of the trawl door, thereby increasing the potential for hydrodynamic lift generation during operation of the trawl door. By extension is meant that the controllable hydrofoil arrangement increases the length of the overall trawl door; hence, in one or more embodiments, when the controllable hydrofoil arrangement is in the engaged position the trawl door extended length is at least 5% longer than the trawl door nonextended length when the controllable hydrofoil arrangement is in the disengaged position.

A trawl door chord length (often just chord length) is normally defined as the straight-line distance across the face of a trawl door from the leading edge (the front edge that meets the water first) to the trailing edge (the back edge), measured along a line perpendicular to the span. In one or more embodiments, the trawl door has a chord length defined as the length measured from a leading edge of a first hydrofoil of the overlapping sequence of the plurality of hydrofoils to a trailing edge of a last hydrofoil of the overlapping sequence of the plurality of hydrofoils. This would mean that the leading edge of the first hydrofoil of the overlapping sequence of the plurality of hydrofoils defines the leading edge of the trawl door, while the trailing edge of the last hydrofoil of the overlapping sequence of the plurality of hydrofoils defines the trailing edge of the trawl door. Thus, in one or more embodiments, the trawl door has a chord length equal to the length measured from a leading edge of a first hydrofoil of the overlapping sequence of the plurality of hydrofoils to a trailing edge of a last hydrofoil of the overlapping sequence of the plurality of hydrofoils. The chord length of the trawl door would however change, if either the trailing edge or the leading edge of the trawl door is not defined by the trailing/leading edge of hydrofoils, but other structural elements are positioned in front on the first hydrofoil or behind the last hydrofoil. It is often advantageous to have the leading edge of the first hydrofoil to define the leading edge of the trawl door. Further, it could be advantageous to have the trailing edge of the last hydrofoil to define the trailing edge of the trawl door to avoid potential generation of stall.

In one or more embodiments, the trawl door chord length is defined as the length measured from a leading edge of a first hydrofoil of the overlapping sequence of the plurality of hydrofoils to the trailing edge of the controllable hydrofoil arrangement.

The trawl door of the present invention is also defined by the trawl door extended length and the trawl door nonextended length. The trawl door nonextended length is defined as the length measured from a leading edge of a first hydrofoil of the overlapping sequence of the plurality of hydrofoils to a trailing edge of a last hydrofoil of the controllable hydrofoil arrangement, when the arrangement is in the disengaged position; thus, in one or more embodiments, the trawl door has a nonextended length defined as the length measured from a leading edge of a first hydrofoil of the overlapping sequence of the plurality of hydrofoils to a trailing edge of a last hydrofoil of the controllable hydrofoil arrangement, when the arrangement is in the disengaged position. In one or more embodiments, the nonextended length is substantially equal to the chord length.

The trawl door extended length is defined as the length measured from a leading edge of a first hydrofoil of the overlapping sequence of the plurality of hydrofoils to a trailing edge of a last hydrofoil of the controllable hydrofoil arrangement, when the arrangement is in an engaged position; thus, in one or more embodiments, the trawl door has a extended length defined as the length measured from a leading edge of a first hydrofoil of the overlapping sequence of the plurality of hydrofoils to a trailing edge of a last hydrofoil of the controllable hydrofoil arrangement, when the arrangement is in an engaged position.

In one or more embodiments, when the controllable hydrofoil arrangement is in the engaged position the trawl door extended length is at least 5% longer than the trawl door nonextended length when the controllable hydrofoil arrangement is in the disengaged position. In one or more embodiments, when the controllable hydrofoil arrangement is in the engaged position the trawl door extended length is at least 10% longer than the trawl door nonextended length when the controllable hydrofoil arrangement is in the disengaged position. In one or more embodiments, when the controllable hydrofoil arrangement is in the engaged position the trawl door extended length is at least 15% longer than the trawl door nonextended length when the controllable hydrofoil arrangement is in the disengaged position. In one or more embodiments, when the controllable hydrofoil arrangement is in the engaged position the trawl door extended length is at least 20% longer than the trawl door nonextended length when the controllable hydrofoil arrangement is in the disengaged position. In one or more embodiments, when the controllable hydrofoil arrangement is in the engaged position the trawl door extended length is at least 25% longer than the trawl door nonextended length when the controllable hydrofoil arrangement is in the disengaged position. By suction side is meant the convex outer side of the trawl door being made of the overlapping sequence of hydrofoils having channels between them. It is also the side, which has the highest flow speed of water hereby creating the lowest pressure.

In one or more embodiments, the nonextended length of the trawl door is substantially equal to the chord length of the trawl door. In one or more embodiments, the ratio between the nonextended length of the trawl door and the chord length of the trawl door is between 0.9 and 1.1. In one or more embodiments, the nonextended length of the trawl door is equal to the chord length of the trawl door.

In one or more embodiments, when the controllable hydrofoil arrangement is in the engaged position the trawl door chord length is extended by at least 5% compared to when the controllable hydrofoil arrangement is in the disengaged position. In one or more embodiments, when the controllable hydrofoil arrangement is in the engaged position the trawl door chord length is extended by at least 10% compared to when the controllable hydrofoil arrangement is in the disengaged position. In one or more embodiments, when the controllable hydrofoil arrangement is in the engaged position the trawl door chord length is extended by at least 15% compared to when the controllable hydrofoil arrangement is in the disengaged position. In one or more embodiments, when the controllable hydrofoil arrangement is in the engaged position the trawl door chord length is extended by at least 20% compared to when the controllable hydrofoil arrangement is in the disengaged position. In one or more embodiments, when the controllable hydrofoil arrangement is in the engaged position the trawl door chord length is extended by at least 25% compared to when the controllable hydrofoil arrangement is in the disengaged position. By suction side is meant the convex outer side of the trawl door being made of the overlapping sequence of hydrofoils having channels between them. It is also the side, which has the highest flow speed of water hereby creating the lowest pressure.

It may be particularly advantageous to fabricate the trawl door of a material that is robust, and can withstand wear and tear. The controllable hydrofoil arrangement may be made, at least partly, of a material different from the material of which the rest of the trawl door is made; hence, in one or more embodiments, the trawl door is made of metal. In one or more embodiments, at least parts of the controllable hydrofoil arrangement is made of a polymeric material, such as at least 50% of the controllable hydrofoil arrangement being made of a polymeric material. In one or more embodiments, the polymeric material is polyurethane (PUR). In one or more embodiments, at least 50% of an extended part of the controllable hydrofoil arrangement is being made of a polymeric material, such as at least 60%, 70%, or even 80% of the extended part. The extended part of the controllable hydrofoil arrangement is defined as the part of the controllable hydrofoil arrangement which extends outside the elongated round shaped tube.

The disclosed trawl door may comprise an upper half and a lower half when vertically positioned, as during normal trawl operation; hence, in one or more embodiments, the trawl door is made of a first half and a second half. The trawl door may, however, not be limited to be made of only two halves.

If the trawl door comprises an upper half and a lower half, a first drive means is placed to control the position of the controllable hydrofoil arrangement placed in the upper half of the trawl door, and a second drive means is placed to control the position of the controllable hydrofoil arrangement placed in the lower half of the trawl door. In one or more embodiments, the trawl door is made of a first half and a second half, wherein the first half comprises a first part of the controllable hydrofoil arrangement and the second half comprises a second part of the controllable hydrofoil arrangement, and wherein a first drive means is placed to control the position of the first part of the controllable hydrofoil arrangement and a second drive means is placed to control the position of the second part of the controllable hydrofoil arrangement.

By having at least two sets of controllable hydrofoil arrangement, arranging them in two halves of the trawl door, and by being able to engage/disengage only one, or both of them, individually (via the drive means), the trawl door is able to not only be controlled in one direction, but in two directions, i.e. side-to-side and up-and-down.

In one or more embodiment, the trawl door comprises additional drive means, such as a third and a fourth drive means, such as a third, a fourth, a fifth, and a sixth drive means, or such as a third, a fourth, a fifth, a sixth, a seventh, and an eighth drive means.

In one or more embodiments, the trawl door further comprises one or more front wire attachment holes and one or more rear bridle attachment holes. The front wire attachment holes and rear bridle attachment holes may be in the horizontal forward/mid and aft end of the trawl door, respectively.

In one or more embodiments, the trawl door comprises at least two shutters, such as at least three, such as at least four, such as at least five, or such as at least six shutters.

Each shutter can be configured to rotate around a pivoting axis, where a fixation device may structurally connect the shutters to the pivoting axes. The energy amount required to make shutters pivot around their pivoting axis is kept minimal by orientating said shutters such that they, upon pivoting, move substantially parallel to their own main surfaces such that water pressure forces are directed substantially perpendicular to the moving direction of the shutters. Hence, in one or more embodiments, the shutters are configured to move substantially parallel to their own main surfaces such that water pressure forces are directed substantially perpendicular to the moving direction of the shutters and said forces pointing substantially through the shutter pivoting axis, when the shutters pivot around their pivoting axis during operation of the trawl door.

Further, in one or more embodiments, the shutters are configured to move substantially parallel to their own main surfaces such that water pressure forces are directed substantially perpendicular to the moving direction of the shutters and said forces pointing substantially through the shutter pivoting axis, when the shutters pivot around their pivoting axis during operation of the trawl door.

The pivoting around the axis may be limited, such that entire revolutions of the shutters around the pivoting axis is not possible. By an entire revolution of the shutters around the pivoting axis is meant that the shutters are rotated 360 degrees around the axis without being blocked of forced into other parts of the trawl door.

In one or more embodiments, the trawl door further comprising one or more fixation devices, wherein the one or more fixation devices are arranged to structurally connect the controllable hydrofoil arrangement to the pivoting axis. In one or more embodiments, the trawl door comprises at least two fixation devices, such as at least three, such as at least four, such as at least five, or such as at least six fixation devices.

In one or more embodiments, the controllable hydrofoil arrangement is split into a first set of one or more controllable hydrofoil arrangements and a second set of one or more controllable hydrofoil arrangements, and wherein a first drive means is arranged to control the position of the first set of the controllable hydrofoil arrangement and a second drive means is arranged to control the position of the second set of the controllable hydrofoil arrangement.

The first and the second drive means arranged to control the position of the controllable hydrofoil arrangement may be actuators, which means that when the actuator is extended, the controllable hydrofoil arrangement is rotated around the pivoting axis in one direction, and when the actuators are retracted, the controllable hydrofoil arrangement is rotated around the pivoting axis in the opposite direction.

In one or more embodiments, the drive means are one or more actuators arranged to rotate the controllable hydrofoil arrangement between the disengaged position and the engaged position. In another embodiment, the drive means are one or more gear devices comprising at least two gear parts.

In one or more embodiments, the trawl door further comprises one or more front wire attachment holes. Front wire attachment holes are used to connect one or several wires from the fishing vessel to the trawl door, so the trawl door may be used during trawling operations.

In one or more embodiments, the one or more front wire attachment holes are positioned in the horizontal forward/mid of the trawl door.

In one or more embodiments, the trawl door further comprises one or more rear bridle attachment holes. Rear bridle attachment holes may be used to connect one or several wires from the fishing net/trawling net to the trawl door, so the trawl door may be used during trawling operations for dragging a fishing net/trawling net. The trawl door may also be used for towing seismic equipment for seabed measurements used for measuring the seabed composition.

In one or more embodiments, the one or more rear bridle attachment holes are positioned in the aft end of the trawl door.

In one or more embodiments, the trawl door further comprises section endplates and stiffeners.

The drive means are arranged to operate the controllable hydrofoil arrangement from a disengaged position to an engaged position and vice versa. In one or more embodiments, the controllable hydrofoil arrangement substantially increases the deflection of the flow by extending the suction side further rearwards, thereby increasing the lift force when pivoting towards the engaged position. In one or more embodiments, the controllable hydrofoil arrangement is configured such that upon rotating from the disengaged position towards the engaged position the controllable hydrofoil arrangement extends the suction side of the trawl door, thereby increasing the potential for hydrodynamic lift generation during operation of the trawl door. In one or more embodiments, when the controllable hydrofoil arrangement is in the engaged position the trawl door length is extended by at least 5% compared to when the controllable hydrofoil arrangement is in the disengaged position, such as extended by at least 10%, such as extended by at least 15%, such as extended by at least 20%, or such as extended by at least 25% compared to when the controllable hydrofoil arrangement is in the disengaged position.

If the trawl door further comprises one or more shutters, other or similar drive means may be used to operate these shutters. If shutters are included the shutters substantially reduces or prevents a fluid flow through one or more of the flow channels during operation of the trawl door by at least 50%. A 50% reduction may also be seen as a reduction of the flow by a factor of two, i.e. halving the flow through the flow channel in the engaged state compared to the disengaged position. In one or more embodiments, the shutters substantially reduces or prevents a fluid flow through one or more of the flow channels during operation of the trawl door by at least 75%. A 75% reduction may also be seen as a reduction of the flow by a factor of four, i.e. only a quarter of the flow is let through the flow channel in the engaged state compared to the disengaged position. In one or more embodiments, the at least one shutter substantially reduces or prevents a fluid flow through one or more of the flow channels during operation of the trawl door by at least 90%. A 90% reduction may also be seen as a reduction of the flow by a factor of ten, i.e. only a one tenth of the flow is let through the flow channel in the engaged state compared to the disengaged position. In one or more embodiments, the at least one shutter substantially reduces or prevents a fluid flow through one or more of the flow channels during operation of the trawl door by at least 99%. A 99% reduction may also be seen as a reduction of the flow by a factor of one hundred, i.e. only a one hundredth of the flow is let through the flow channel in the engaged state compared to the disengaged position. The shutter may also almost completely block the flow through the flow channel, hence, in one or more embodiments, the at least one shutter substantially blocks a fluid flow through one or more of the flow channels during operation of the trawl door.

In one or more embodiments, the pivoting axis is arranged to allow rotational movement of the controllable hydrofoil arrangement of up to 180 degrees. In one or more embodiments, the controllable hydrofoil arrangement is not allowed full revolutions around the pivoting axis. In one or more embodiments, the controllable hydrofoil arrangement is configured to prevent full revolutions around the pivoting axis.

In one or more embodiments, the pivoting axis is arranged to allow rotational movement of the controllable hydrofoil arrangement of up to 180 degrees, such as up to 160 degrees, such as up to 140 degrees, such as up to 130 degrees, such as up to 120 degrees, such as up to 100 degrees, but without allowing a full revolutions around the pivoting axis.

The pivoting around the axis may be limited, such that entire revolutions of the controllable hydrofoil arrangement around the pivoting axis is not possible. By an entire revolution of the controllable hydrofoil arrangement around the pivoting axis is meant that the controllable hydrofoil arrangement are rotated 360 degrees around the axis without being blocked or forced into other parts of the trawl door.

The trawl door may further comprise one or more fixation devices, which may be used to structurally connect the controllable hydrofoil arrangement to the pivoting axes. Hence, in one or more embodiments, the trawl door further comprises one or more fixation devices, wherein the one or more fixation devices are arranged to structurally connect the controllable hydrofoil arrangement to the pivoting axis.

In one or more embodiments, the trawl door comprises at least two fixation devices, such as at least three, such as at least four, such as at least five, or such as at least six fixation devices.

In one or more embodiments, the plurality of hydrofoils at least comprises the first hydrofoil defining the leading edge of the overlapping sequence of the plurality of hydrofoils and the last hydrofoil defining the trailing edge of the overlapping sequence of the plurality of hydrofoils. The plurality of hydrofoils, as disclosed herein, may be multiple hydrofoils, such as 3, 4, 5, 6 hydrofoils. The sequence of hydrofoils will be defined by a leading edge, the foremost edge when dragging/trawling the trawl door through water during trawling operation, and a trailing edge, the rearmost edge when dragging/trawling the trawl door through water during trawling operation.

In one or more embodiments, the plurality of hydrofoils at least comprises the first hydrofoil defining the leading edge of the overlapping sequence of the plurality of hydrofoils and the last hydrofoil defining the trailing edge of the overlapping sequence of the plurality of hydrofoils and one or more middle hydrofoils positioned between the first hydrofoil and the last hydrofoil.

In one or more embodiments, the one or more middle hydrofoils comprises at least two hydrofoils.

In one or more embodiments, the plurality of hydrofoils comprises at least three hydrofoils. In one or more embodiments, the plurality of hydrofoils comprises at least four hydrofoils.

In one or more embodiments, the controllable hydrofoil arrangement comprises at least two hydrofoil parts, a leading hydrofoil part and a trailing hydrofoil part, the at least two hydrofoil parts extending in parallel in the longitudinal direction of the plurality of hydrofoils and being arranged in an overlapping sequence so that a hydrofoil flow channel is formed between the two hydrofoil parts, each hydrofoil part having a leading edge and a trailing edge. In one or more embodiments, the leading hydrofoil part and/or the trailing hydrofoil part are comprised of one or more hydrofoils, such as one hydrofoil each. The leading hydrofoil part may be made of multiple hydrofoils in sequence, as may the trailing hydrofoil part.

In one or more embodiments, the trawl door further comprises at least one round-shaped elongated element, wherein the at least one round-shaped elongated element extends in a longitudinal direction parallel to the longitudinal direction of the hydrofoils.

It is known from fluid dynamic theory, (see e.g. Smith, A.M.O., High-Lift Aerodynamics, Journal of Aircraft, 1975, 12(6), pp. 501-530), that a circular tube ideally has the highest potential of all shapes for deflecting a flow, i.e. for creating lift force. The word "ideally" means that it is assumed there is no hydrodynamic/aerodynamic stall. However, in real life stall this is unavoidable. Any non-streamlined geometry, such as box-shaped, circular, or otherwise blunt bodies will create flow separation and subsequent stall when the flow fails to run smoothly over the geometry's entire surface.

Furthermore, a circular tube has an omni-directional cross-section, so lift-forces will appear symmetrically around the tube thereby cancelling each other.

A round-shaped elongated element as disclosed herein is an element, which in its cross-section is circular or elliptically shaped. This does not mean that the element needs to be perfectly elliptical, but can have minor variation in its cross-sectional shape. However, the element as disclosed herein is not a hydrofoil or has a hydro-profile shape with a defined leading edge and trailing edge.

Compared to standard multi-element trawl doors, the use of a round-shaped elongated element can improve the lift coefficient by approximately 50%.

An additional benefit is that the absence of hydrofoil characteristics such as a leading edge and a trailing edge on the tube element causes the tube element to be quite insensitive to incidence angle between the flow passing the trawl door and the trawl, which is also known as the Angle-of-Attack (AoA). A trawl door with a tube element will therefore be able to operate well and create a high lift force over a large AoA range of up to 35 degrees. For standard known trawl doors, the operative AoA range is approximately 20 degrees. A higher operative AoA range is a benefit in general, and specifically when the trawl doors experience different AoAs, e.g. when fishing in crosscurrent conditions and/or when the trawler makes a 180 degree turn.

In one or more embodiments, the at least one round-shaped elongated element is positioned at a pressure side of the plurality of hydrofoils and at a rear part of the overlapping sequence of the plurality of hydrofoils in such a way that the at least one round-shaped elongated element forms a structurally connected integrated part to the plurality of hydrofoils such that at least one flow channel is formed between the at least one round-shaped elongated element and the last hydrofoil of the overlapping sequence of the plurality of hydrofoils.

Using a circular tube as an ideal lift-creating hydrodynamic element, by combining it with a series of regular hydrofoils, such that the flow passing the tube, which would otherwise separate and create stall, is guided inside a flow channel between one side of the circular tube and one or several of the regular hydrofoils, such that stall is completely suppressed or at least substantially delayed. Elimination of stall on one side of the circular tube will create a high deflection of the flow around the tube, in fluid dynamic theory known as "circulation", thereby creating lift.

The circular tube will not only create lift acting on the circular tube itself, but the circulation will also increase the lift forces created by the regular hydrofoils, such that the lift coefficient of the entire trawl door is increased.

The technical term "lift coefficient" is a dimensionless coefficient that relates the lift generated by a lifting body to the fluid density around the body, the fluid velocity and an associated reference area. A lifting body is a foil or a complete foil-bearing body such as a fixed-wing aircraft or a trawl door.

The flow channel formed between the round-shaped elongated element and the last hydrofoil of the overlapping sequence of hydrofoils is arranged to guide a flow of water and is arranged to suppress hydrodynamic stall, which would otherwise be generated around the round-shaped elongated element, if the overlapping sequence of hydrofoils were not there.

The width of the flow channel formed between the elongated element and the last hydrofoil may be defined in terms of the width of the other flow channels formed between neighbouring hydrofoils. Hence, in one or more the width of the at least one flow channel formed between the at least one round-shaped elongated element and the last hydrofoil of the overlapping sequence of the plurality of hydrofoils is between 50% and 200% of the width of the one or more flow channels formed between neighbouring hydrofoils.

By the width of the one or more flow channels formed between neighbouring hydrofoils is meant that if there are multiple channels between neighbouring hydrofoils, and if the width of these flow channels is not substantially the same, and average of the width of these flow channels is taken and used as "the width of the one or more flow channels formed between neighbouring hydrofoils".

If it is assumed that the cross-section of the elongated element is perfectly elliptical, that means that the minor variation in its cross-sectional shape can be disregarded, the elongated element can further be described via the eccentricity. The eccentricity of an ellipse has a well-known mathematical meaning/definition, which a person skilled in the art is fully aware of, and knows how to calculate. If the cross-sectional shape is not perfectly elliptical, the eccentricity (e) may be defined as e = (1-b^2/a^2)^(1/2), where a is the length of the major axis and b is the length of the minor axis.

In one or more embodiments, the at least one round-shaped elongated element has an eccentricity at or below 0.88, such as at or below 0.85, such as at or below 0.80, such as at or below 0.70, such as at or below 0.65.

In one or more embodiments, the at least one round-shaped elongated element has an eccentricity at or above 0.05, such as at or above 0.10.

In one or more embodiments, the at least one round-shaped elongated element has an eccentricity between 0 and 0.88, such as between 0 and 0.85, such as between 0 and 0.80, such as between 0 and 0.70, such as between 0 and 0.65.

In one or more embodiments, the at least one round-shaped elongated element has an eccentricity between 0.05 and 0.88 such as between 0.05 and 0.65.

In one or more embodiments, the at least one round-shaped elongated element has an eccentricity between 0.1 and 0.88, such as between 0.1 and 0.65.

In one or more embodiments, the at least one round-shaped elongated element has an elliptically shaped cross-section, having a minor axis and a major axis, and wherein the major axis is between 5% and 75% of the chord length and the ratio between the minor axis and the major axis is between 0.5 and 1.0.

The size of the elongated element is further defined by the length of the major axis of the elongated element compared to the chord length of the trawl door. The chord length of the trawl door in this case is defined as the chord length measured from the leading edge of the first hydrofoil to the trailing edge of the last hydrofoil when the controllable hydrofoil arrangement is in the disengaged position. The chord length of the trawl door changes (increases) when the controllable hydrofoil arrangement is in the engaged position. The values given here in relation to the major and minor axis is in relation to the chord length in the disengaged position. In one or more embodiments, the major axis is between 5% and 70% of the chord length, such as between 5% and 70%, such as between 5% and 65%, such as between 5% and 60%, such as between 5% and 55%, such as between 5% and 50%, such as between 5% and 45%, such as between 5% and 40%, of the chord length.

In one or more embodiments, the major axis is between 10% and 75% of the chord length, such as between 15% and 75%, such as between 20% and 75%, such as between 25% and 75%, such as between 30% and 75%, such as between 35% and 75%, such as between 40% and 75% of the chord length.

In one or more embodiments, the major axis is between 10% and 70% of the chord length, such as between 15% and 70%, such as between 15% and 65%, such as between 20% and 65%, such as between 25% and 65% of the chord length.

The cross-sectional shape of the elongated element is further defined by the ratio between the minor and major axes of the elongated element. In one or more embodiments, the ratio between the minor axis and the major axis is between 0.50 and 1.00, such as between 0.55 and 1.00, such as between 0.60 and 1.00, such as between 0.65 and 1.00, such as between 0.70 and 1.00.

In one or more embodiments, the ratio between the minor axis and the major axis is between 0.50 and 0.95, such as between 0.50 and 0.90, such as between 0.50 and 0.85, such as between 0.50 and 0.50, such as between 0.50 and 0.75.

In one or more embodiments, the ratio between the minor axis and the major axis is between 0.50 and 0.95, such as between 0.55 and 0.95, such as between 0.60 and 0.95, such as between 0.65 and 0.95, such as between 0.70 and 0.95.

In one or more embodiments, the ratio between the minor axis and the major axis is between 0.50 and 0.90, such as between 0.55 and 0.90, such as between 0.60 and 0.90, such as between 0.65 and 0.90, such as between 0.70 and 0.90, such as between 0.75 and 0.90, such as between 0.80 and 0.90, such as between 0.85 and 0.90.

The pivoting axis for rotating the controllable hydrofoil arrangement, which extends in the longitudinal direction of the plurality of hydrofoils, may be located inside the elongated element. Hence, in one or more embodiments, the pivoting axis is located inside the at least one round-shaped elongated element. Alternatively, the pivoting axis for rotating the controllable hydrofoil arrangement, which extends in the longitudinal direction of the plurality of hydrofoils, may be located outside the elongated element. Hence, in one or more embodiments, the pivoting axis is located outside the at least one round-shaped elongated element. It may be particularly advantageous if the pivoting axis inside or adjacent to the elongated element; thus, in one or more embodiments, the pivoting axis is located inside or adjacent to the at least one round-shaped elongated element. In one or more embodiments, the pivoting axis is located adjacent to the at least one round-shaped elongated element.

Further, the controllable hydrofoil arrangement may be positioned inside the elongated element and be configured to extend out from a hole/slit in the elongated element. Hence, in one or more embodiments, the round-shaped elongated element is hollow and comprises an opening in the trailing part, and wherein the controllable hydrofoil arrangement is configured to be positioned inside the hollow round-shaped elongated element when in the disengaged position and configured to extend out of the opening in the trailing part of the round-shaped elongated element in the engaged position. In one or more embodiments the controllable hydrofoil arrangement, pivoting axis, and the round-shaped elongated element are all configured to pivot the controllable hydrofoil arrangement around the pivoting axis such that they are substantially positioned inside the round-shaped elongated element when in a disengaged position. By substantially is meant that a smaller part, such as 20% or less, or such as 10% or less of the total area of the controllable hydrofoil arrangement are extending outside the circumference of the round-shaped elongated element.

In order for the round-shaped elongated element to be configured to pivot the controllable hydrofoil arrangement around the pivoting axis such that it is substantially positioned inside the round-shaped elongated element when in a disengaged position, requires that there is an opening in the longitudinal direction of the round-shaped elongated element. The opening should at least have a size corresponding to the size of the controllable hydrofoil arrangement. It may further be preferred that the opening is even larger than the size of the controllable hydrofoil arrangement for easy access.

Further, by pivoting the controllable hydrofoil arrangement around the pivoting axis and into the inner of the round-shaped elongated element, the inactive controllable hydrofoil arrangement does not interfere with the flow at all or only interfere to a minor degree. Additionally, the disengaged controllable hydrofoil arrangement are well protected when located inside the round-shaped elongated element when the trawl door is inactive, e.g. during transport or other handling or when the trawl door hang inertly on the rear of the fishing vessel.

Further technical equipment may be positioned inside the elongated element. In one or more embodiments, technical equipment for control of the trawl door is positioned inside the at least one round-shaped elongated element.

In one or more embodiments, the at least one round-shaped elongated element comprises an interior cavity.

An interior cavity as disclosed herein is to be understood as a cavity, which are in fluid connection with water during trawling operation, i.e. the cavity is to be flooded with water whenever the trawl door is submerged in water, e.g. during normal trawling operation. This means, that the cavity is not an interior closed cavity, but at least comprises one opening in which it can be in fluid connected with water.

In one or more embodiments, the interior cavity is in fluid connection with water surrounding the at least one round-shaped elongated element during operation of the trawl door.

In one or more embodiments, the interior cavity extends through the at least one round-shaped elongated element in the longitudinal direction of at least one round-shaped elongated element. The interior cavity of the at least one round-shaped elongated element may comprise electro-mechanical devices, such as sensor equipment, battery power, or hydraulic systems. The cavity may also comprise other components, such as buoyancy or gravity elements.

In one or more embodiments, a first part of the interior cavity comprises one or more buoyancy elements. In one or more embodiments, a second part of the interior cavity comprises one or more gravity elements.

A buoyancy element is an element, with a mass density lower than the mass density of water, such as seawater. The buoyancy element may e.g. be made of syntactic foam encapsulated in a polyethylene external skin. The buoyancy element can be optimized to reach the required buoyancy at operating water depth.

A gravity element is an element, with a mass density higher than the mass density of water, such as seawater. The gravity element may e.g. be made of iron or another density heavy material. The gravity element can be optimized to reach the required volume gravity mass at operating water depth

The elongated element may comprise additional holes being in fluid connection with the surrounding water during trawling operations. Hence, in one or more embodiments, the at least one round-shaped elongated element comprises an interior cavity and wherein one or more holes extends perpendicular to the longitudinal direction of the at least one round-shaped elongated element and extends from the interior cavity through the at least one round-shaped elongated element. In one or more embodiments, the one or more holes are elliptically shaped.

By having these holes extending from the cavity of the elongated element and through the element easy and quick flooding of the cavity is obtained when the trawl door is submerged in water. Furthermore, these holes enable easy access to, and maintenance of, any electro-mechanical equipment being located inside the round elongated element cavity.

In one or more embodiments, the interior cavity comprises electro-mechanical devices, such as sensor equipment, battery power, or hydraulic systems.

Further to the controllable hydrofoil arrangement, shutters may be pivoted around a pivoting axis such that they are positioned inside the round-shaped elongated element when in disengaged position. Hence, in one or more embodiments the shutters, pivoting axis, and the round-shaped elongated element are all configured to pivot the shutters around the pivoting axis such that they are substantially positioned inside the round-shaped elongated element when in a disengaged position. By substantially is meant that a smaller part, such as 40% or less, such as 20% or less, such as 10% or less of the total area of the shutters are extending outside the circumference of the round-shaped elongated element.

The trawl door may be divided into two or several sections. In one or more embodiments, the trawl door is divided into a first half and a second half, wherein the first half comprises a first half of the plurality of hydrofoils and a first half of the controllable hydrofoil arrangement, and wherein the second half comprises a second half of the plurality of hydrofoils and a second half of the controllable hydrofoil arrangement. The trawl door may also be divided into three parts, four parts, five parts, etc.

In one or more embodiments, the trawl door is divided into a first half and a second half, wherein the first half comprises a first half of the plurality of hydrofoils, a first half of the controllable hydrofoil arrangement, and a first half of the at least one round-shaped elongated element, and wherein the second half comprises a second half of the plurality of hydrofoils a second half of the controllable hydrofoil arrangement, and a second half of the at least one round-shaped elongated element.

If the trawl door is divided into two halves, the cavity in one-half of the element may contain buoyancy elements. In one or more embodiments, the interior cavity of the first half of the at least one round-shaped elongated element comprises one or more buoyancy elements. The cavity in the other half of the element may contain gravity elements. In one or more embodiments, the interior cavity of the second half of the at least one round-shaped elongated element comprises one or more gravity elements.

The shape of the trawl door in the span wise direction may vary. In one or more embodiments, the trawl door is linear along the span wise direction. In another embodiment, the trawl door is curved, bent, or angled, along the span wise direction. In yet another embodiment, the trawl door comprises two halves, wherein the two halves are linear along the span wise direction of each half, and wherein the two halves are connected to form a non-linear angle of the trawl door along the span wise direction of the trawl door.

By "span wise" is meant the dimension along the length of the trawl door perpendicular to the passing water when in use. When the trawl door is vertically erected, the span wise direction is the vertical direction.

In practice, a trawl door will probably never be curved in the span wise direction, as it will require double-curved surfaces and thus impossible to make in a simple manufacture using rolled steel sheets. Many trawl doors used today have one or more bends of 5, 10, 12, or 16 degrees. This may make the span wise direction of the trawl door appear curved, but in reality, it is constructed of multiple linear pieces connected with bends between each piece.

In one or more embodiments, the trawl door comprises plurality of linear pieces connected with bends of between 2 and 20 degrees between each piece in the span wise direction.

The shape/arrangement of the trawl door may further be defined. In one or more embodiments, the plurality of hydrofoils are one-sided.

By one-sided is meant that the hydrofoil is made by just one flat or curved plate, such that the pressure side and suction side are offset only by the plate thickness.

In one or more embodiments, the plurality of one-sided hydrofoils are made by rolled metal sheets.

In one or more embodiments, the plurality of hydrofoils are double-sided.

In one or more embodiments, the plurality of hydrofoils are hybrids between single-sided and double-sided.

The trawl door as disclosed herein may be used for multiple variations of trawl operation. Hence, in one or more embodiments, the trawl door is of pelagic type, semi-pelagic type, bottom-door type, or combinations hereof.

The hydrofoils, controllable hydrofoil arrangement, and/or the elongated element may be made of the same or different material. In one or more embodiments, one or more of the plurality of hydrofoils, and/or the controllable hydrofoil arrangement, and/or the at least one round-shaped elongated element are made from metal or a lightweight material such as plastic or rubber, wood, or fibreboard material.

In one or more embodiments, one or more of the plurality of hydrofoils are made from metal or a lightweight material such as plastic or rubber, wood, or fibreboard material.

Particularly the controllable hydrofoil arrangement may be made of a less resistant material, as it can be hidden inside the elongated element during transportation, and hence only exposed during operation, thus, in one or more embodiments, one or more of the controllable hydrofoil arrangement are made from metal or a lightweight material such as plastic or rubber, wood, or fibreboard material.

In one or more embodiments, the at least one round-shaped elongated element is made from metal or a lightweight material such as plastic or rubber, wood, or fibreboard material.

When describing the embodiments, the combinations and permutations of all possible embodiments have not been explicitly described. Nevertheless, the mere fact that certain measures are recited in mutually different dependent claims or described in different embodiments does not indicate that a combination of these measures cannot be used to advantage. The present invention envisage all possible combinations and permutations of the described embodiments.

### Detailed description of the drawings

Various examples are described hereinafter with reference to the figures. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.

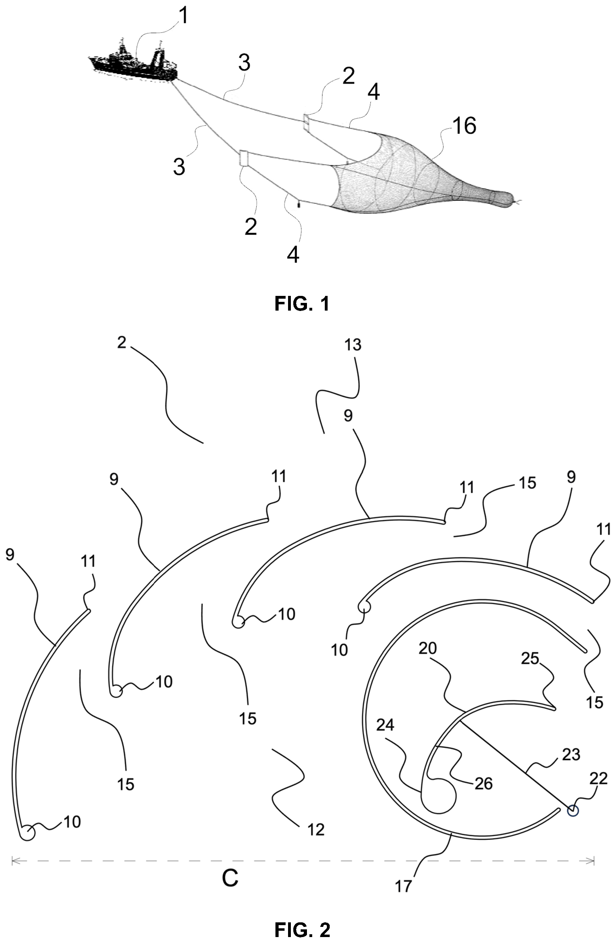

Fig. 1 is a perspective view of a conventional trawling operation comprising a (towing) fishing vessel 1 towing a set of a starboard and a port trawl doors 2, which provide spreading force for the fishing trawl net 16 being towed by said set of trawl doors 2. The figure shows, how the trawl doors 2 are connected and trawled by the fishing vessel 1 via a wire 3 connected to each trawl door 2. These wires 3 may be attached as seen in the figure in the mid-section of the trawl door 2 e.g. via one or more attachment holes. The fishing trawl net 16 is connected to each trawl door 2 via two bridles 4. These may be, as shown here, be connected to the trawl door 2 in the aft top and bottom of the trawl door 2.

Fig. 2 is a cross-sectional view of a trawl door 2 with energy-efficient controllable hydrofoil arrangement where the pivoting axis 22 is adjacent to a round-shaped elongated element 17 and the controllable hydrofoil arrangement 20 is shown in a disengaged position. The trawl door 2 comprises several hydrofoils 9, each with a leading edge and a trailing edge, and a round-shaped elongated element 17 positioned on the pressure side 12 of the several hydrofoils 9. A notable feature is the mix of a round shaped leading edge of the hydrofoils 9 and a curved-sheet "single-sided" trailing edge of the hydrofoils 9. The mixed hydrofoils 9 still contain the usual hydrofoil characteristics: A leading edge 10, a trailing edge 11, slenderness, and camber. The depicted round-shaped elongated element 17 comprises the pivoting axis 22 on which the controllable hydrofoil arrangement 20 pivot around when moving from the engaged position to the mid-position and further to the disengaged position (as the one shown in the figure), or vice versa. The controllable hydrofoil arrangement 20 is shown connected to the pivoting axis 22 by fixations devices 23. The embodiment shows how the controllable hydrofoil arrangement 20 is hingedly connected to the pivoting axis 22 by structural elements (shown as a thin line). In fig 2, the controllable hydrofoil arrangement 20 is positioned in its disengaged position inside the round-shaped elongated element 17 where said controllable hydrofoil arrangement 20 is hydrodynamically inactive. From this end position the controllable hydrofoil arrangement 20 can only pivot in one direction.

Also shown on fig. 2 is the trawl door's imaginary chord line C. In this embodiment the chord line is defined between the leading edge 10 of the first hydrofoil 9 of the overlapping sequence of the plurality of hydrofoils 9 to the trailing edge 11 of the last hydrofoil 9 of the overlapping sequence of the plurality of hydrofoils 9 as no structural features are present on either side of the leading and trailing edge of these two hydrofoils.

The hydrofoils 9, and the trawl door 2, is arranged so the pressure side 12 of the hydrofoil 9 is on the concave (inner) side of the cambered hydrofoils 9, and the suction side 13 is on the convex (outer) side of said hydrofoils 9. The round-shaped elongated element 17 is positioned on the pressure side 12 of the hydrofoils 9.

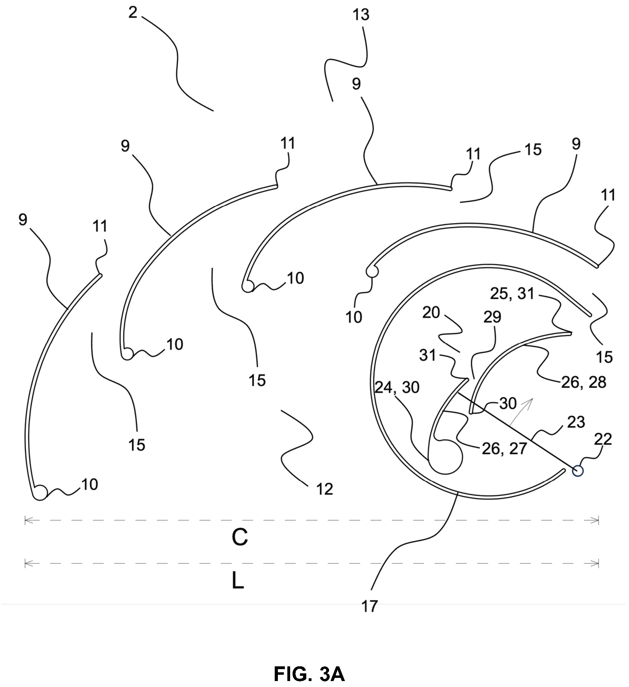

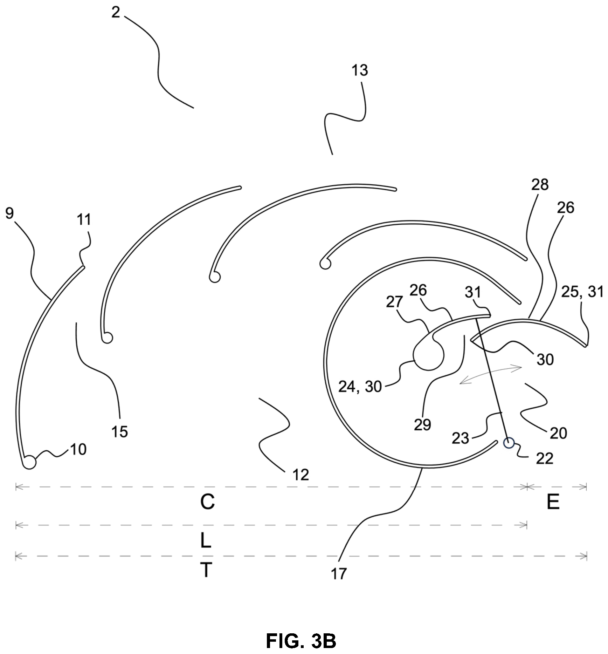

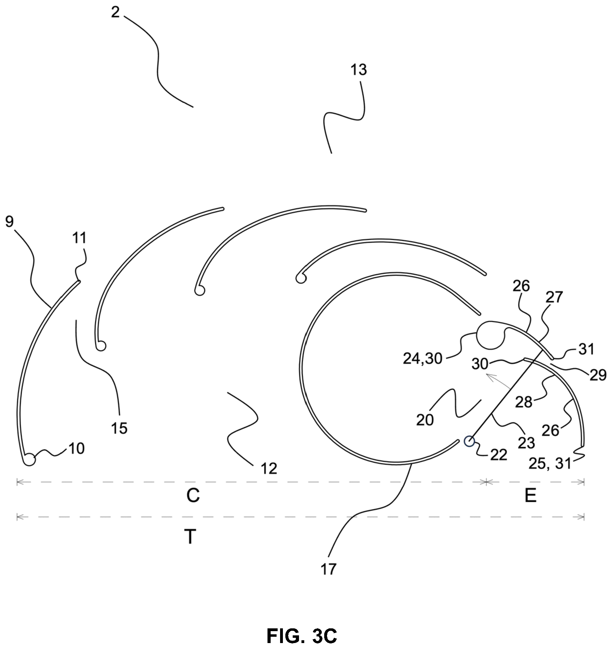

Fig. 3 is a cross-sectional view of a trawl door 2 with energy-efficient controllable hydrofoil arrangement where the pivoting axis 22 is adjacent to a round-shaped elongated element 17 and the controllable hydrofoil arrangement 20 is shown in A) disengaged position, B) mid-position, and C) engaged position. The trawl door 2 comprises several hydrofoils 9, each with a leading edge 10 and a trailing edge 11, and a round-shaped elongated element 17 positioned on the pressure side 12 of the several hydrofoils 9. The depicted round-shaped elongated element 17 comprises the pivoting axis 22 on which the controllable hydrofoil arrangement 20 pivot around when moving from the engaged position C) to the mid-position B) and further to the disengaged position A) (C) → B) → A)), or vice versa (A) → B) → C)). The controllable hydrofoil arrangement 20 is shown connected to the pivoting axis 22 by fixations devices 23. The embodiment shows how the controllable hydrofoil arrangement 20 is hingedly connected to the pivoting axis 22 by structural elements (shown as a thin line). In Fig 3A, the controllable hydrofoil arrangement 20 is positioned in its disengaged position inside the round-shaped elongated element 17, said controllable hydrofoil arrangement 20 hereby being hydrodynamically inactive. From this end position the controllable hydrofoil arrangement 20 can only pivot in one direction, as indicated. In Fig 3B, the controllable hydrofoil arrangement 20 is positioned mid-range between its disengaged position and its fully engaged position, said controllable hydrofoil arrangement 20 hereby being roughly 50% hydrodynamically active, meaning that it is unleashing 50% of the obtainable extra lift force from the controllable hydrofoil arrangement 20. From this position the controllable hydrofoil arrangement 20 can pivot in both directions, as indicated. In Fig 3C, the controllable hydrofoil arrangement 20 is positioned in its fully engaged position, said controllable hydrofoil arrangement 20 hereby being fully hydrodynamically active, unleashing 100% of the obtainable extra lift force. From this end position the controllable hydrofoil arrangement 20 can only pivot in one direction, as indicated.

As disclosed above, a trawl door also always has a chord length. The skilled person will normally define such as the straight-line distance across the face of a trawl door from the leading edge (the front edge that meets the water first) to the trailing edge (the back edge), measured along a line perpendicular to the span. Shown on fig. 3 is also the trawl door's imaginary chord line C. Here it is defined between the leading edge 10 of the first hydrofoil 9 of the overlapping sequence of the plurality of hydrofoils 9 to the trailing edge 11 of the last hydrofoil 9 of the overlapping sequence of the plurality of hydrofoils 9. Further shown are also the nonextended length L of the trawl door in addition to the extension E of the trawl door. The extended length of the trawl door corresponds to the sum of the nonextended length L of the trawl door together with the extension E of the trawl door, i.e. the extended length of trawl door = L+E. The extended length of the trawl door may also correspond to the total length T of the trawl door when the controllable hydrofoil arrangement 20 is in an engaged position, whereas the nonextended length L may correspond to the total length T (and potentially the chord length C) when the controllable hydrofoil arrangement 20 is in the disengaged position.

Further, it can be seen how the hydrofoils 9, and the trawl door 2, is arranged so the pressure side 12 of the hydrofoil 9 is on the concave (inner) side of the cambered hydrofoils 9, and the suction side 13 is on the convex (outer) side of said hydrofoils 9. The round-shaped elongated element 17 is positioned on the pressure side 12 of the hydrofoils 9.

Even further, figure 3 shows how one exemplary arrangement could be of the controllable hydrofoil arrangement 20. In this embodiment, the controllable hydrofoil arrangement 20 is comprised of a controllable hydrofoil arrangement 20 extending in the longitudinal direction of the plurality of hydrofoils 9 and arranged at a pressure side 12 of the plurality of hydrofoils 9 where the controllable hydrofoil arrangement 20 has a leading edge 24 and a trailing edge 25. The controllable hydrofoil arrangement 20 is positioned inside the round shaped elongated element 17. The controllable hydrofoil arrangement 20 is shown as two hydrofoil parts 26 each having a leading edge 30 and a trailing edge 31. The two hydrofoil parts 26 are positioned in an overlapping sequence so that a flow channel 29 is formed between the two hydrofoil parts 26.

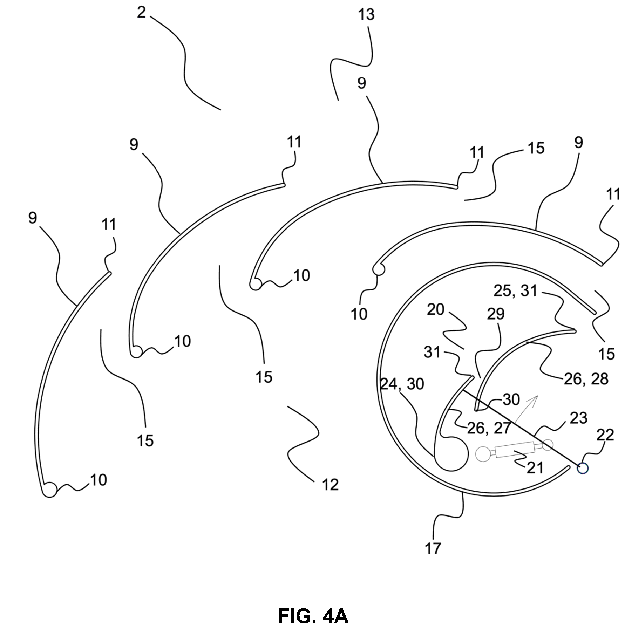

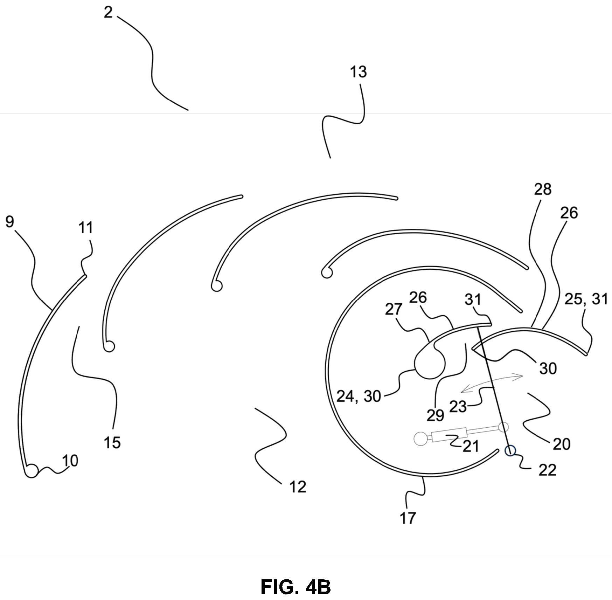

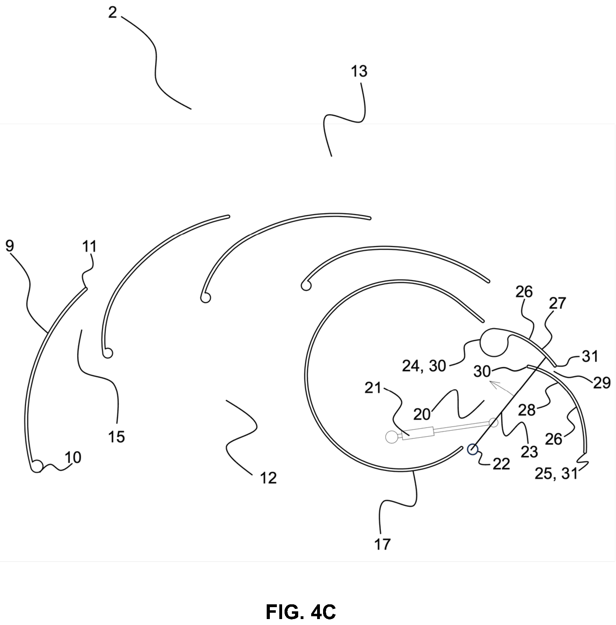

Fig. 4 is a cross-sectional view of a trawl door 2 with energy-efficient controllable hydrofoil arrangement 20 where the pivoting axis 22 and drive means 21, are adjacent to a round-shaped elongated element 17, and the controllable hydrofoil arrangement 20 is shown in a) disengaged position, b) mid-position, and c) engaged position. The drive means 21 here comprise of a spindle arrangement used for actuation, which will then pivot the controllable hydrofoil arrangement 20 around the pivoting axis 22. The controllable hydrofoil arrangement 20 and drive means 21 are shown connected to the pivoting axis 22 by fixations devices 23. The remaining construction of this exemplary embodiment corresponds to the embodiment shown in figure 3.

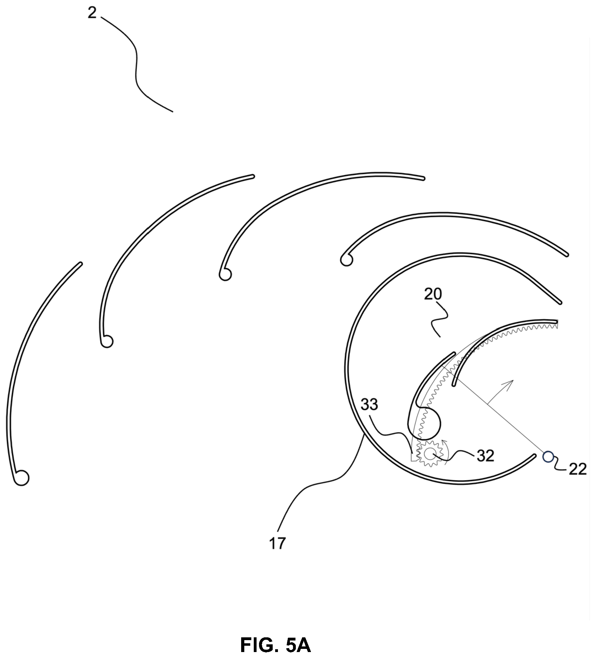

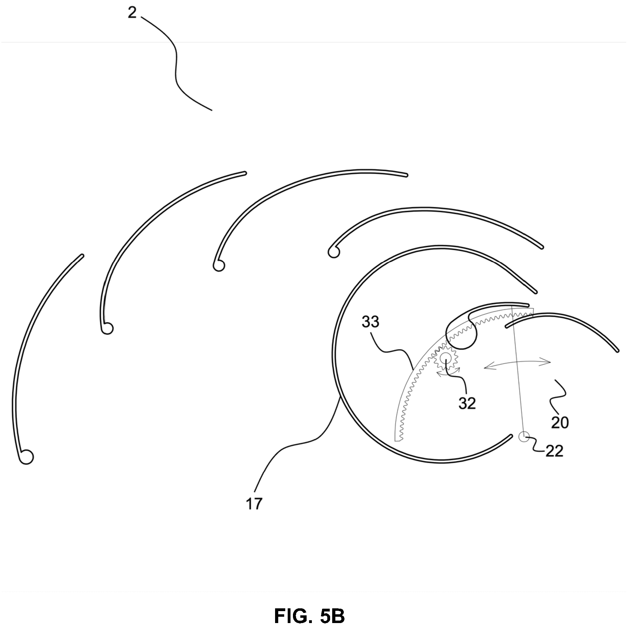

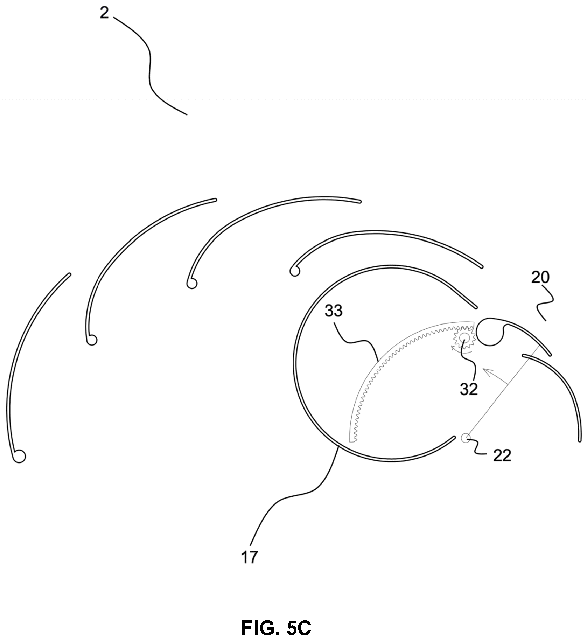

Figure 5 is a cross-sectional view of another embodiment of a trawl door 2 with an energy-efficient controllable hydrofoil arrangement 20 where the pivoting axis 22 are adjacent to a round-shaped elongated element 17 and where the drive means is in this embodiment a gear device 32, 33 and is positioned inside the round-shaped elongated element 17, and the controllable hydrofoil arrangement 20 is shown in a) disengaged position, b) mid-position, and c) engaged position, and where the controllable hydrofoil arrangement 20 is pivoted around the pivoting axis 22 such that it is positioned inside the round-shaped elongated element 17 when in disengaged position. The gear device comprises a rotation gear 32 located inside the round-shaped elongated element 17 and a hydrofoil gear 33 located on the controllable hydrofoil arrangement 20. When the rotation gear 32 is rotated (e.g. via a motor) it will move the controllable hydrofoil arrangement 20 from a disengaged position to an engaged position or vice versa via the hydrofoil gear 33. As depicted in the cross-sectional view of the embodiment, if the rotation gear 32 is rotated clockwise the controllable hydrofoil arrangement 20 will pivot around the pivoting axis 22 towards the disengaged position, while if the rotation gear 32 is rotated counterclockwise the controllable hydrofoil arrangement 20 will pivot around the pivoting axis 22 towards the engaged position. This configuration can be switched around by adding an additional rotation gear between the rotation gear 32 and the hydrofoil gear 33, or in other ways, which are within the skilled person's knowledge. The depicted round-shaped elongated element 17 comprises the pivoting axis 22 on which the controllable hydrofoil arrangement 20 pivot around when moving from the engaged position C) to the mid-position B) and further to the disengaged position A) (C) → B) → A)), or vice versa (A) → B) → C)). The remaining construction of this exemplary embodiment corresponds to the embodiment shown in figure 3 and 4.

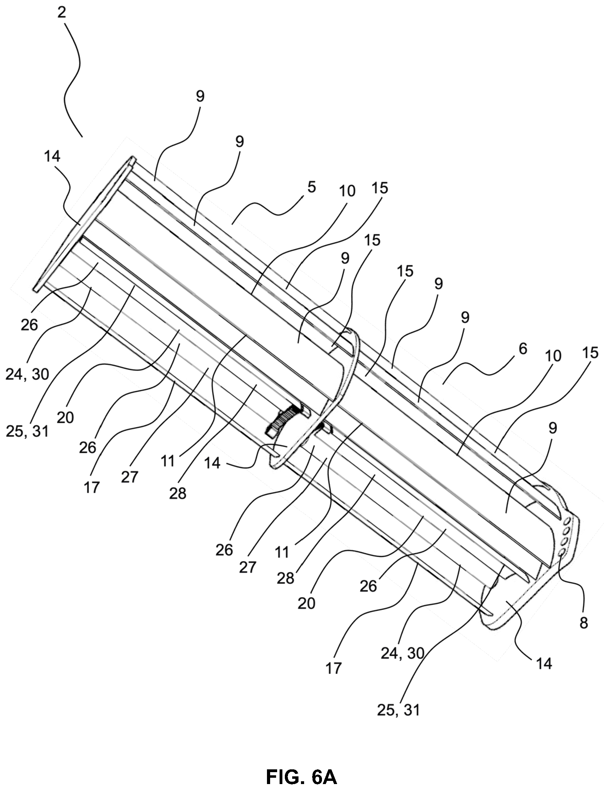

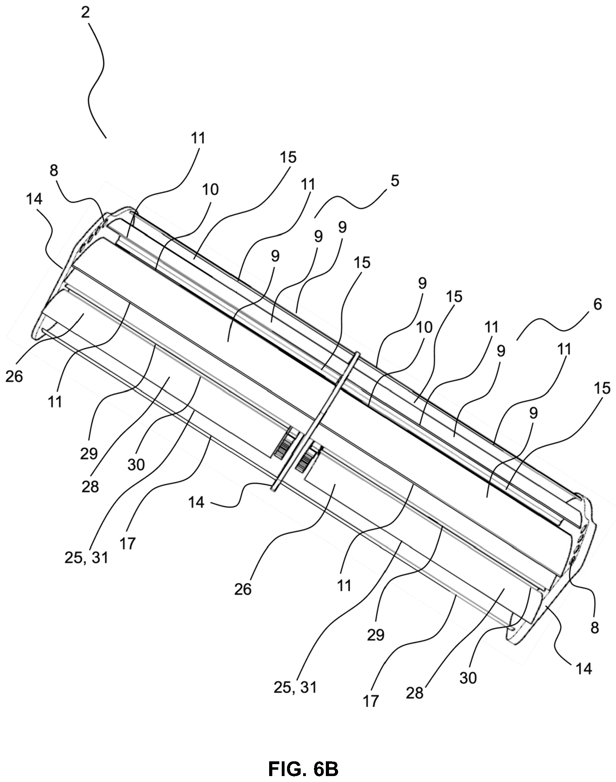

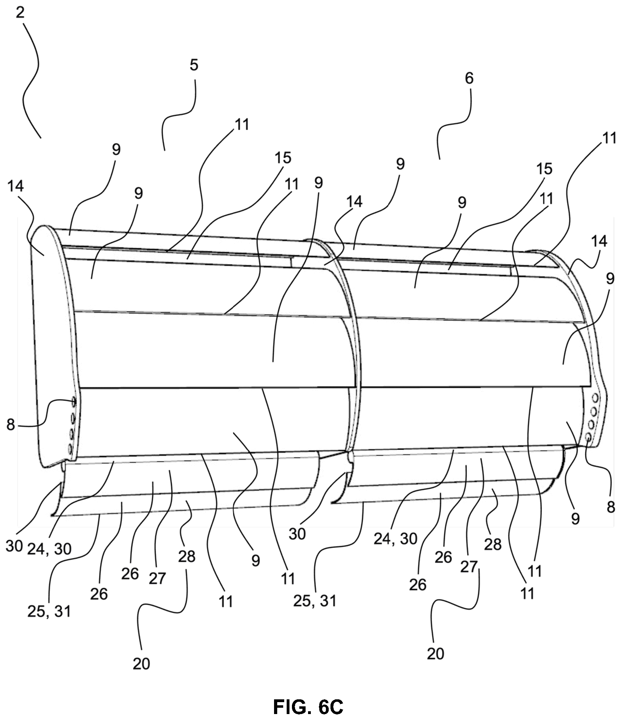

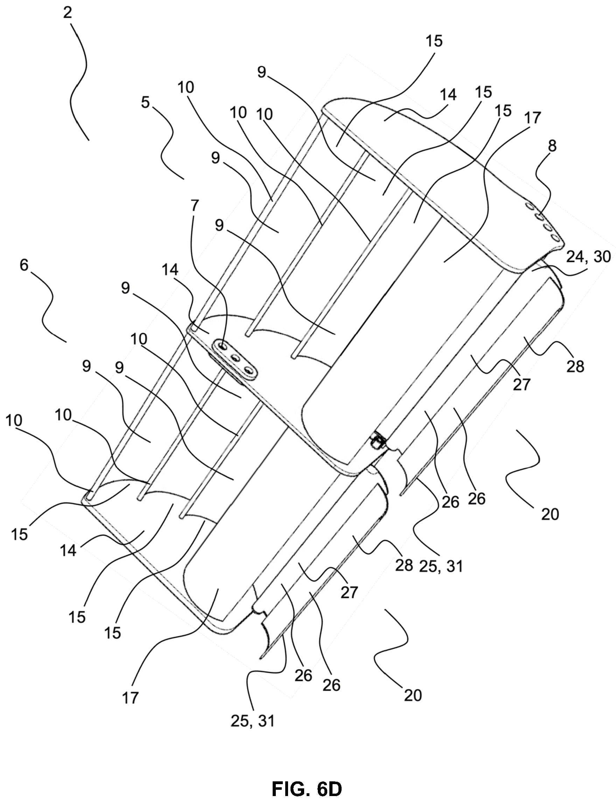

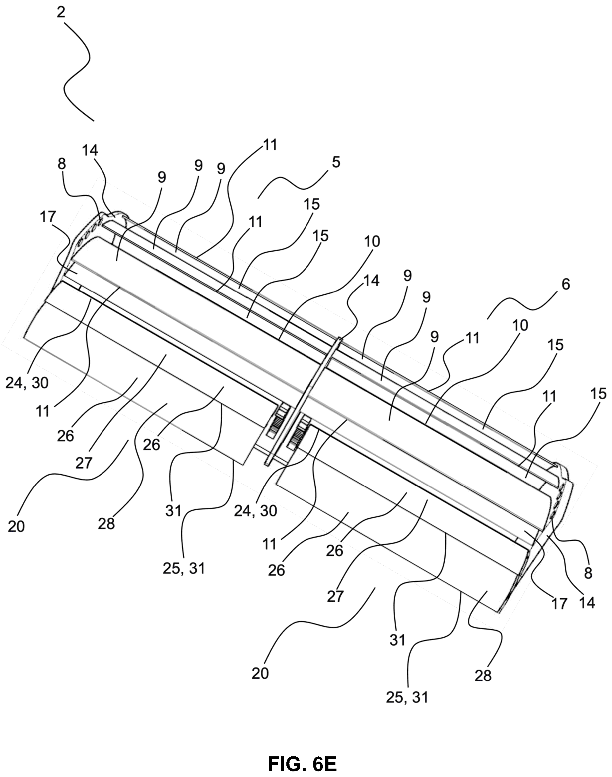

Fig. 6 is a perspective view of the trawl door 2 from figure 3, as seen from different angles. The controllable hydrofoil arrangement 20 is shown in a disengaged position (fig. 6A), in a mid-position (fig. 6B), and in an fully engaged position (fig. 6C-E). The trawl door 2 first half 5 and the trawl door 2 second half 6, both comprising hydrofoils 9, leading edges 10, trailing edges 11, section endplates and stiffeners 14, rear bridle attachment holes 8, and a round-shaped elongated element 17. The bridles (not shown) towing the trawl may be attached to one of the upper and one of the lower rear bridle attachment holes 8, or one bridle will be attached to one of mid rear bridle attachment holes 8. Different types of bridle rigging are possible depending on the type of fishing trawl net to be used and what kind of fish to catch. The main wire (not shown) connecting the trawl door to the towing vessel may be attached to one of the front wire attachment holes 7. Alternative front wire attachment hole 7 designs may be used, such as the possibility of having front wire attachment holes 7 in different vertical heights slightly offset from the shown span wise mid-position.

The figure further shows how the round-shaped elongated element 17 has an interior cavity with an opening towards the surrounding environment. The embodiment shows one opening in the first half 5 of the trawl door 2. The opening can be seen extending in the longitudinal direction of the round-shaped elongated element 17. These holes extend from the interior cavity of the round-shaped elongated element 17 through the round-shaped elongated element 17, hereby making the interior cavity being in fluid connection with the surrounding environment. The opening further serves as the opening for the controllable hydrofoil arrangement 20, such that the controllable hydrofoil arrangement 20 can extend out of the round shaped elongated element 17 when going from disengaged to engaged position.

Further, figure 6 shows how one exemplary arrangement could be of the controllable hydrofoil arrangement 20. In this embodiment, the first and second half controllable hydrofoil arrangement 20 is comprised of a controllable hydrofoil arrangement 20 extending in the longitudinal direction of the plurality of hydrofoils 9 and arranged at a pressure side of the plurality of hydrofoils 9 where the controllable hydrofoil arrangement 20 has a leading edge 24 and a trailing edge 25. The controllable hydrofoil arrangement 20 is positioned inside the round shaped elongated element 17. The controllable hydrofoil arrangement 20 is shown as two hydrofoil parts 26 each having a leading edge 30 and a trailing edge 31. The two hydrofoil parts 26 are positioned in an overlapping sequence so that a flow channel 29 is formed between the two hydrofoil parts 26.

### References

- 1.: Fishing vessel
- 2.: Trawl door
- 3.: Wire
- 4.: Bridle
- 5.: Trawl door first half
- 6.: Trawl door second half
- 7.: Front wire attachment holes
- 8.: Rear bridle attachment holes
- 9.: Hydrofoil
- 10.: Hydrofoil leading edge
- 11.: Hydrofoil trailing edge
- 12.: Hydrofoil pressure side
- 13.: Hydrofoil suction side
- 14.: Section endplates and stiffeners
- 15.: Flow channel
- 16.: Fishing trawl net
- 17.: Round-shaped elongated element
- 20.: Controllable hydrofoil arrangement
- 21.: Drive means
- 22.: Pivoting axis
- 23.: Fixation device
- 24.: Controllable hydrofoil arrangement leading edge
- 25.: Controllable hydrofoil arrangement trailing edge
- 26.: Hydrofoil part
- 27.: Leading hydrofoil arrangement part
- 28.: Trailing hydrofoil arrangement part
- 29.: Controllable hydrofoil flow channel
- 30.: Hydrofoil arrangement part leading edge
- 31.: Hydrofoil arrangement part trailing edge
- 32.: Rotation gear
- 33.: Hydrofoil gear

- C.: Chord length of trawl door
- L.: Nonextended length of trawl door
- E.: Extension of trawl door
- T.: Total length of trawl door

## Claims

1. A trawl door (2) comprising
a plurality of hydrofoils (9) extending in parallel in a longitudinal direction of the hydrofoils (9) and being arranged in an overlapping sequence so that one or more flow channels (15) are formed between neighbouring hydrofoils (9), each hydrofoil (9) having a leading edge (10) and a trailing edge (11),
a controllable hydrofoil arrangement (20) extending in the longitudinal direction of the plurality of hydrofoils (9) and arranged at a pressure side (12) of the plurality of hydrofoils (9), and having a leading edge (24) and a trailing edge (25),
drive means (21) for rotating the controllable hydrofoil arrangement (20) about a pivoting axis (22), the pivoting axis (22) extending in the longitudinal direction of the plurality of hydrofoils (9),
wherein the trawl door has a chord length (C),
wherein the drive means (21) are arranged to rotate the controllable hydrofoil arrangement (20) about the pivoting axis (22) between a disengaged position and an engaged position, wherein when the controllable hydrofoil arrangement (20) is in the engaged position the trawl door chord length (C) is extended compared to when the controllable hydrofoil arrangement (20) is in the disengaged position, and
wherein the controllable hydrofoil arrangement (20) is orientated such that it, upon rotation by the drive means (21) about the pivoting axis (22), during operation of the trawl door (2), move substantially parallel to its own main surface such that water pressure forces are directed substantially perpendicular to the moving direction of the controllable hydrofoil arrangement (20).

2. The trawl door (2) according to any preceding claim, wherein one or more flow channels (15) are formed between the plurality of hydrofoils (9) extending in parallel in a longitudinal direction of the hydrofoils (9) and the controllable hydrofoil arrangement (20).

3. The trawl door (2) according to any preceding claim, wherein the chord length (C) is defined as the length measured from a leading edge (10) of a first hydrofoil of the overlapping sequence of the plurality of hydrofoils (9) to a trailing edge (11) of a last hydrofoil of the overlapping sequence of the plurality of hydrofoils (9).

4. The trawl door (2) according to any preceding claim, wherein the chord length (C) is substantially equal to a length measured from a leading edge (10) of a first hydrofoil (9) of the overlapping sequence of the plurality of hydrofoils (9) to the trailing edge (25) of the controllable hydrofoil arrangement (20) when the controllable hydrofoil arrangement (20) is in the disengaged position.

5. The trawl door (2) according to any preceding claim, wherein the trawl door has a chord length (C) defined as the chord length measured from a leading edge (10) of a first hydrofoil (9) of the overlapping sequence of the plurality of hydrofoils (9) to the trailing edge (25) of the controllable hydrofoil arrangement (20).

6. The trawl door (2) according to any preceding claim, wherein the trawl door (2) has a nonextended length (L) defined as the length measured from a leading edge (10) of a first hydrofoil of the overlapping sequence of the plurality of hydrofoils (9) to a trailing edge (31) of a last hydrofoil of the controllable hydrofoil arrangement (20) when the controllable hydrofoil arrangement (20) is in the disengaged position, and wherein the nonextended length (L) is substantially equal to the chord length (C).

7. The trawl door (2) according to any preceding claim, wherein the controllable hydrofoil arrangement (20) is orientated such that the water pressure forces are directed substantially through the pivoting axis (22) during trawl operations.

8. The trawl door (2) according to any preceding claim, wherein when the controllable hydrofoil arrangement (20) is in the engaged position the trawl door chord length (C) is extended by at least 5% compared to when the controllable hydrofoil arrangement (20) is in the disengaged position, such as at least 10%, such as at least 15%, such as by at least 20%, or such as by at least 25%.

9. The trawl door (2) according to any preceding claim, wherein at least parts of the controllable hydrofoil arrangement (20) is made of a polymeric material, such as at least 50% of the controllable hydrofoil arrangement (20) being made of a polymeric material.

10. The trawl door (2) according to any preceding claim, wherein the trawl door (2) further comprising one or more fixation devices (23), wherein the one or more fixation devices (23) are arranged to structurally connect the controllable hydrofoil arrangement (20) to the pivoting axis (22).

11. The trawl door (2) according to any preceding claim, wherein the trawl door (2) further comprising at least one round-shaped elongated element (17);
wherein the at least one round-shaped elongated element (17) extends in a longitudinal direction parallel to the longitudinal direction of the hydrofoils (9) having a leading part and a trailing part;
wherein the at least one round-shaped elongated element (17) is positioned at a pressure side (12) of the plurality of hydrofoils (9) and at a rear part of the overlapping sequence of the plurality of hydrofoils (9) in such a way that the at least one round-shaped elongated element (17) forms a structurally connected integrated part to the plurality of hydrofoils (9) such that at least one flow channel (15) is formed between the at least one round-shaped elongated element (17) and the last hydrofoil (9) of the overlapping sequence of the plurality of hydrofoils (9);
wherein the round-shaped elongated element is hollow and comprises an opening in the trailing part, and wherein the controllable hydrofoil arrangement (20) is configured to be positioned inside the hollow round-shaped elongated element (17) when in the disengaged position and configured to extend out of the opening in the trailing part of the round-shaped elongated element (17) in the engaged position.

12. The trawl door (2) according to any preceding claim, wherein the controllable hydrofoil arrangement (20) comprises at least two hydrofoil parts (26), a leading hydrofoil part (27) and a trailing hydrofoil part (28), the at least two hydrofoil parts (26) extending in parallel in the longitudinal direction of the plurality of hydrofoils (9) and being arranged in an overlapping sequence so that a hydrofoil flow channel (29) is formed between the two hydrofoil parts (26), each hydrofoil part (26) having a leading edge (30) and a trailing edge (31).

13. Use of a set of trawl doors (2) comprising one starboard trawl door (2) and one port trawl door (2), for trawling operations, wherein each of the trawl doors (2) comprises a plurality of hydrofoils (9) extending in parallel in a longitudinal direction of the hydrofoils (9) and being arranged in an overlapping sequence so that one or more flow channels (15) are formed between neighbouring hydrofoils (9), each hydrofoil (9) having a leading edge (10) and a trailing edge (11),
a controllable hydrofoil arrangement (20) extending in the longitudinal direction of the plurality of hydrofoils (9) and arranged at a pressure side (12) of the plurality of hydrofoils (9), and having a leading edge (24) and a trailing edge (25),
drive means (21) for rotating the controllable hydrofoil arrangement (20) about a pivoting axis (22), the pivoting axis (22) extending in the longitudinal direction of the plurality of hydrofoils (9),
wherein the trawl door has a chord length (C),
wherein the drive means (21) are arranged to rotate the controllable hydrofoil arrangement (20) about the pivoting axis (22) between a disengaged position and an engaged position, wherein when the controllable hydrofoil arrangement (20) is in the engaged position the trawl door chord length (C) is extended compared to when the controllable hydrofoil arrangement (20) is in the disengaged position, and
wherein the controllable hydrofoil arrangement (20) is orientated such that it, upon rotation by the drive means (21) about the pivoting axis (22), during operation of the trawl door (2), move substantially parallel to its own main surface such that water pressure forces are directed substantially perpendicular to the moving direction of the controllable hydrofoil arrangement (20).

14. Use of a set of trawl doors (2) comprising one starboard trawl door (2) and one port trawl door (2), for towing a fishing trawl net (16), wherein a fishing vessel (1) is towing the set of trawl doors (2), and wherein each of the trawl doors (2) comprises a plurality of hydrofoils (9) extending in parallel in a longitudinal direction of the hydrofoils (9) and being arranged in an overlapping sequence so that one or more flow channels (15) are formed between neighbouring hydrofoils (9), each hydrofoil (9) having a leading edge (10) and a trailing edge (11),
a controllable hydrofoil arrangement (20) extending in the longitudinal direction of the plurality of hydrofoils (9) and arranged at a pressure side (12) of the plurality of hydrofoils (9), and having a leading edge (24) and a trailing edge (25),
drive means (21) for rotating the controllable hydrofoil arrangement (20) about a pivoting axis (22), the pivoting axis (22) extending in the longitudinal direction of the plurality of hydrofoils (9),
wherein the trawl door has a chord length (C),
wherein the drive means (21) are arranged to rotate the controllable hydrofoil arrangement (20) about the pivoting axis (22) between a disengaged position and an engaged position, wherein when the controllable hydrofoil arrangement (20) is in the engaged position the trawl door chord length (C) is extended compared to when the controllable hydrofoil arrangement (20) is in the disengaged position, and
wherein the controllable hydrofoil arrangement (20) is orientated such that it, upon rotation by the drive means (21) about the pivoting axis (22), during operation of the trawl door (2), move substantially parallel to its own main surface such that water pressure forces are directed substantially perpendicular to the moving direction of the controllable hydrofoil arrangement (20).

15. Use of a set of trawl doors (2) comprising one starboard trawl door (2) and one port trawl door (2), for towing seismic equipment for seabed measurements for measuring the seabed composition, and wherein each of the trawl doors (2) comprises a plurality of hydrofoils (9) extending in parallel in a longitudinal direction of the hydrofoils (9) and being arranged in an overlapping sequence so that one or more flow channels (15) are formed between neighbouring hydrofoils (9), each hydrofoil (9) having a leading edge (10) and a trailing edge (11),
a controllable hydrofoil arrangement (20) extending in the longitudinal direction of the plurality of hydrofoils (9) and arranged at a pressure side (12) of the plurality of hydrofoils (9), and having a leading edge (24) and a trailing edge (25),
drive means (21) for rotating the controllable hydrofoil arrangement (20) about a pivoting axis (22), the pivoting axis (22) extending in the longitudinal direction of the plurality of hydrofoils (9),
wherein the trawl door has a chord length (C),
wherein the drive means (21) are arranged to rotate the controllable hydrofoil arrangement (20) about the pivoting axis (22) between a disengaged position and an engaged position, wherein when the controllable hydrofoil arrangement (20) is in the engaged position the trawl door chord length (C) is extended compared to when the controllable hydrofoil arrangement (20) is in the disengaged position, and
wherein the controllable hydrofoil arrangement (20) is orientated such that it, upon rotation by the drive means (21) about the pivoting axis (22), during operation of the trawl door (2), move substantially parallel to its own main surface such that water pressure forces are directed substantially perpendicular to the moving direction of the controllable hydrofoil arrangement (20).
